# EUROPEAN PATENT SPECIFICATION

(11) **EP 1 864 225 B1**
(45) Date of publication and mention of the grant of the patent: **20.02.2013**
(21) Application number: 06727283.1
(22) Date of filing: 03.03.2006
(51) Int. Cl.: G06F 15/16, H04L 12/40

(54) **METHOD AND SOFTWARE PRODUCT FOR MANAGING DATA EXCHANGE IN A HIGH-DYNAMICS SAFETY-CRITICAL SYSTEM**
VERFAHREN UND SOFTWAREPRODUKT ZUR VERWALTUNG DES DATENAUSTAUSCHS IN EINEM SICHERHEITSKRITISCHEN SYSTEM MIT HOHER DYNAMIK
PROCEDE ET PRODUIT LOGICIEL PERMETTANT LA GESTION DES ECHANGES DE DONNEES DANS UN SYSTEME HAUTEMENT DYNAMIQUE A SECURITE CRITIQUE

(30) Priority: 04.03.2005 EP 05425123
(43) Date of publication of application: 12.12.2007
(73) Proprietor: SELEX Galileo S.p.A., CAMPI BISENZIO (FI) (IT)
(72) Inventor: RINALDI, Pier, Paolo, I-10099 San Mauro Torinese (IT)
(74) Representative: Jorio, Paolo
(86) International application number: PCT/IB2006/000475
(87) International publication number: WO 2006/092728

(56) References cited:
- EP-A- 1 191 747
- US-A1- 2002 161 863
- US-B1- 6 324 655
- F. BUSCHMANN, R. MEUNIER, H. ROHNERT, P. SOMMERLAD, M. STAHL: "Pattern-Oriented Software Architecture Vol. 1 A System of Patterns" 30 September 1996 (1996-09-30), JOHN WILEY & SONS , GREAT BRITAIN , XP002347430 page 277, paragraph 1 - page 290, last paragraph page 277, paragraph 1 page 277, last paragraph page 278, paragraph 1 - last paragraph page 279, paragraph 1 - page 280, last paragraph page 282, paragraph 1 - page 287, last paragraph page 288, paragraph 1 - page 289, paragraph 6
- D. SCHMIDT, M. STAHL, H. ROHNERT, F. BUSCHMANN: "Pattern-Oriented Software Architecture Vol. 2 Patterns for Concurrent and Networked Objects" 31 January 2000 (2000-01-31), JOHN WILEY & SONS , GREAT BRITAIN , XP002347431 page 399, paragraph 1 - page 422, last paragraph
- BOSCH: "CAN Specification, version 2.0" BOSCH CAN SPECIFICATION VERSION 2.0, 1991, pages 1-72, XP002219808
- TURPIN B: "Advanced Synchronization Techniques for Data Acquisition" NATIONAL INSTRUMENTS. APPLICATION NOTE, no. 128, October 1998 (1998-10), pages 1-14, XP002246106

## Description

### TECHNICAL FIELD

The present invention relates in general to the management of data exchange in a high-dynamics system, namely a system where data processing cycle times of less than ten thousandths of a second are required, operating in a critical context for property safety and above all personal safety, particularly in a context where various kinds of electronic devices, such as, for example, computers and electronic equipment for actuation, measurement and control, displaying and monitoring, are present and on which software applications are loaded, the faults of which could, in addition to producing considerable damage to property, also put human lives at risk.

More in detail, the present invention concerns a method and a software product for the management of data usage between data-producer software modules and data-consumer software modules in a high-dynamics system operating in a critical context for personal and property safety.

The present invention can find useful application in countless technological sectors of which, purely by way of non-limitative example, the aeronautical field can be mentioned, and more specifically avionic systems for aircrafts, the railway field, and more specifically management and control systems for high-speed electric trains, the nautical field, and more specifically management and control systems for hydrofoils, the field of nuclear power plants, and more specifically the control system for the reactor core, etc.

### BACKGROUND ART

As is known, high-dynamics safety-critical systems can, in general, include a plurality of electronic apparatuses, such as sensors and actuators, and a central control system, in turn comprising a plurality of human-machine interface devices (HMI) through which a user, for example an operator of the reference platform (an aircraft pilot in the case of an aircraft platform), can interact with the electronic equipment, for example, to make selections or issue commands, by means of a central control computer connected to the electronic equipment and the human-machine interfaces via a communications bus.

The electronic apparatuses, such as sensors and actuators, and the human-machine interface devices exchange data via a software application, which is loaded on the central control system and implements a direct relation of use between the software management modules associated with the human-machine interface devices and the software management modules associated with the corresponding electronic apparatus.

One of the main limitations of this type of data exchange mechanism between the software management modules associated with the human-machine interface devices and the software management modules associated with the electronic apparatuses lies in the management of concurrent and conflicting access to the data of the same software management module associated with an electronic apparatus by different software management modules associated with respective human-machine interface devices. This problem is currently solved by using techniques of a semaphore type, through which access to the data of the same software management module, associated with an electronic apparatus, is enabled to more than one software management modules, associated with their respective human-interface devices, on the basis of pre-set priorities.

The main inherent drawback in using direct relations of use between software management modules associated with the human-machine interface devices and software management modules associated with the electronic apparatuses resides in the fact that, in the case a new electronic apparatus or a new human-machine interface device is added, or even when they are upgraded, it is necessary to take action on both the relations of use that involve these software management modules and on the management of concurrent accesses to the data, thereby rendering the software application insufficiently flexible and making the development, validation and certification times for safety-critical aspects extremely lengthy and onerous.

In the field of systems that operate in safety-critical contexts, made even more complex by the requirements requested for applications on high-dynamics platforms, the need is felt for the creation of a software architecture that allows the following design objectives to be achieved:
- ability to implement a plurality of human-machine interface devices and a variety of sensors/actuators via an open and modular configuration, where the number of human-machine interface devices and the number of sensors/actuators are functions of the safety level, and therefore of the redundancy level, requested by the platform under development,
- communication between a plurality of human-machine interface devices and sensors/actuators that is achieved through a plurality of instances of a same, uniquely-defined software class,
- decoupling of the software architecture between the plurality of human-machine interface devices and the plurality of sensors/actuators that allows high maintainability of the software application and ease of expansion,
- ability to solve possible access conflicts to the shared data structures, achievable through a rule/priority matrix, and
- a software application in conformity with the necessary process requirements to support the certification procedures associated with safety-critical software applications, according to the RTCA-D0178B standard in the specific case of an aircraft.

F. BUSCHMANN, R. MEUNIER, H. ROHNERT, P. SOMMERLAD, M. STAHL: "Pattern-Oriented Software Architecture Vol. 1 A System of Patterns" 30 September 1996 (1996-09-30), JOHN WILEY & SONS, GREAT BRITAIN, discloses a pattern-oriented software architecture designed for applications that need flexible and extensible user interfaces, or applications that provide services related to the execution of user functions, such as scheduling or undo. A solution is proposed wherein a Command Processor design pattern separates a request for a service from its execution. A command processor component manages request as separate objects, schedules their execution, and provides additional services such as the storing of request objects for later undo.

D. SCHMIDT, M. STAHL, H. ROHNERT, F. BUSCHMANN: "Pattern-Oriented Software Architecture Vol. 2 Patterns for Concurrent and Networked Objects" 31 January 2000 (2000-01-31), JOHN WILEY & SONS, GREAT BRITAIN discloses a pattern-oriented software architecture designed for applications that contain objects whose methods are invoked concurrently by multiple client threads and often modify the state of their objects, wherein for such concurrent applications to execute correctly, it is necessary to synchronize and schedule access to the objects. A solution is proposed wherein a Monitor Object design pattern synchronizes concurrent method execution to ensure that only one method at a time runs within an object. It also allows object's methods to cooperatively schedule their execution sequences.

### DISCLOSURE OF INVENTION

The purpose of the present invention is providing a software architecture for data exchange management in a high-dynamics system, namely a system where data processing cycle times of less than ten thousandths of a second are required, operating in a critical context for personal and property safety, which allows the drawbacks of known systems to be generally overcome, at least in part, and, more specifically, to achieve the above indicated design objectives.

According to the present invention there are provided a high-dynamics safety-critical system and a software product for managing data exchange in the high-dynamics safety-critical system, as defined in the attached claims.

### BRIEF DESCRIPTION OF THE DRAWINGS

For descriptive simplicity and without loss of generality, the present invention will now be described with reference to one of its innumerable applications, in particular the aeronautical application, and with reference to the attached drawings, which illustrate a non-limitative example of embodiment, where:
- Figure 1 shows a block diagram of a mission-control apparatus of an aircraft,
- Figure 2 shows the architecture of a mission computer forming part of the mission-control apparatus of Figure 1, and
- Figure 3 shows the module-based architecture of a software that runs on the mission computer of Figure 2 and implements the management method according to the invention.

### BEST MODE FOR CARRYING OUT THE INVENTION

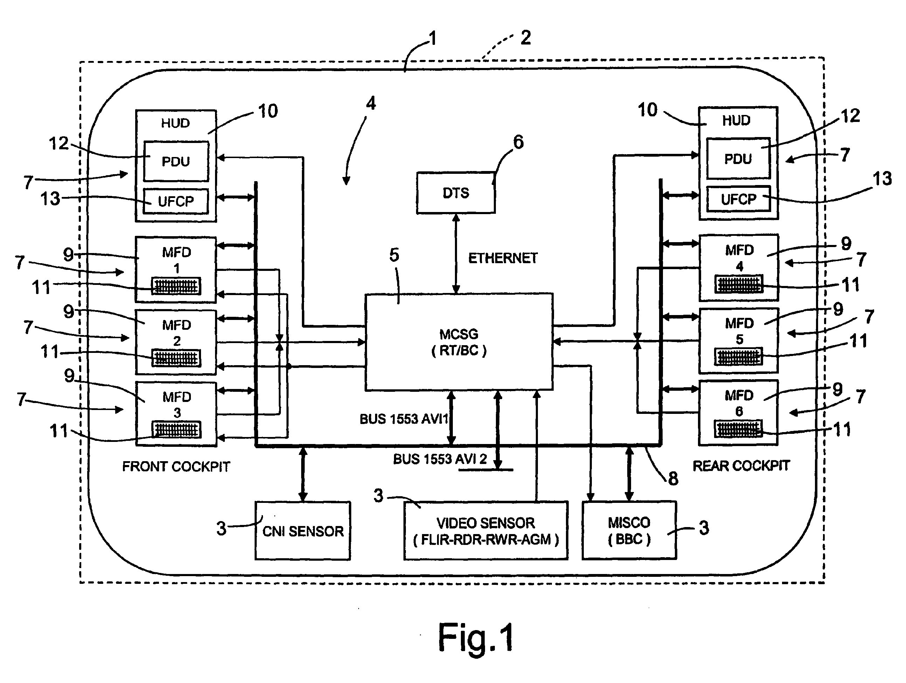

Illustrated schematically in Figure 1, and designated as a whole by 1, is an avionic system of an aircraft 2 (represented schematically by a dashed line), for example an advanced training aircraft.

The avionic system 1 comprises a plurality of on-board apparatuses 3, such as, for example, communication navigation identification sensors (CNIs), video sensors (forward-looking infrared (FLIR), radar (RDR), radar warning receiver (RWR), etc.), weapon systems (air-to-ground missiles (AGM), etc.), interface and reversionary computing unit (MIScellanea COmputer - MISCO), etc., and a mission core system 4 comprising a mission computer (MCSG) 5, a data-transfer system (DTS) 6, connected to the mission computer 5 via an Ethernet cable for transferring mission databases and recording flight data, and a plurality of interface devices 7 connected to the mission computer 5 and to the on-board apparatuses 3 via an external bus 8 of the MIL-STD-1553B type for enabling a user, for example the pilot, to interact with the on-board apparatuses 3.

The interface devices 7 comprise a plurality of smart colour multifunction displays (SMFDs) 9 and head-up display units (HUDs) 10.

In particular, in advanced training aircraft, the smart colour multifunction displays 9 are preferably six in number, three for the front cockpit and three for the rear cockpit, are of the active-matrix liquid-crystal display (AMLCD) type, are provided with a keypad 11 for entry of data or for making selections, and have a 5" x 5" display area.

The head-up display units 10 can be two in number, one for the front cockpit and one for the rear cockpit, and each comprise a pilot display unit (PDU) 12 and a up-front control panel (UFCP) 13.

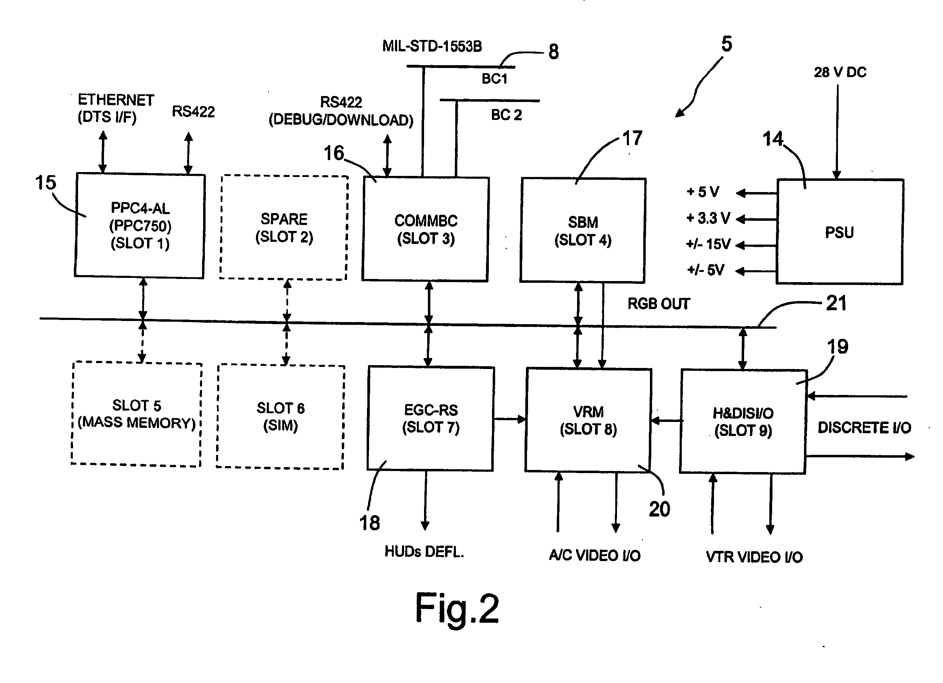

Figure 2 illustrates the architecture of the mission computer 5, which comprises a power-supply unit (PSU) 14, a processing unit (PPC4-AL) 15 based upon a Motorola Power PC750 microprocessor, a communications unit (COMMBC) 16, which interfaces with the external bus 8, a digital map-generation unit (SBM) 17, a graphic-control unit 18 of the raster-stroke type (EGC-RS), designed to generate graphic symbols for the head-up display units 10, a HOTAS (Hands On Throttle And Stick) interface unit 19, a video-selection unit (VRM) 20, which is designed to receive signals from the digital map-generation unit 17, from the graphic-control unit 18 and from the HOTAS interface unit 19, and an internal-communication bus 21 shared between all the units of the mission computer 5 for the exchange of data.

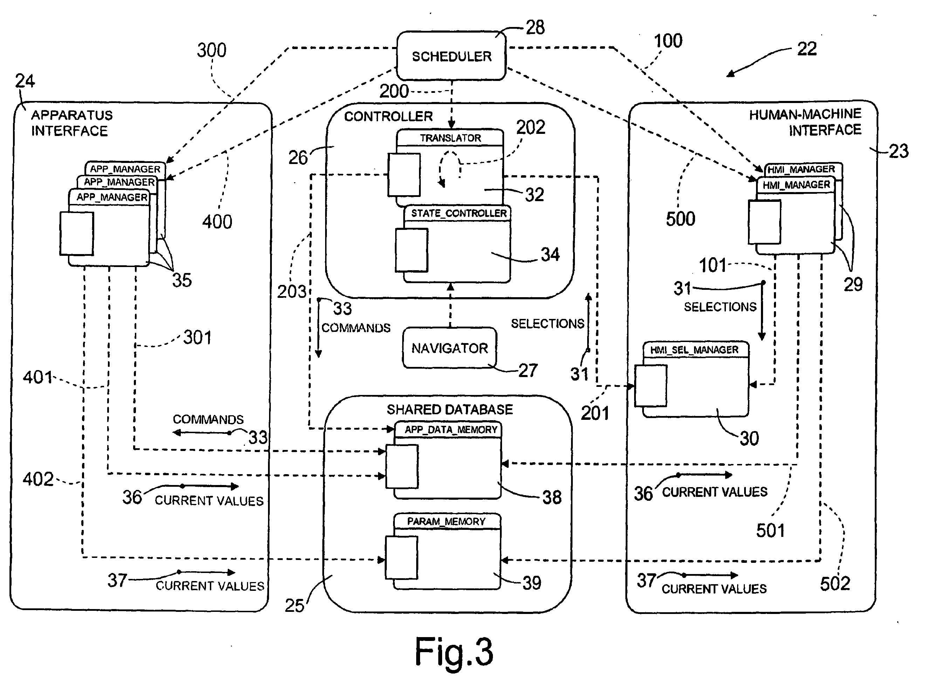

Loaded into the processing unit 15 is an operational flight program (OFP) 22, based upon a module-based architecture illustrated in Figure 3 and compiled in a programming language known as Ada 95, which is based upon the use of the "protected-type" construct that guarantees an atomic access to the data and intrinsically solves the problem of protection from concurrent accesses in reading and writing by parallel processes.

In particular, with reference to Figure 3, the operational flight program 22 can conceptually be divided into the following software objects:
- a software object, hereinafter referred to, for reasons of convenience, with the name of human-machine interface 23, designed for virtualization of the interface devices 7;
- a software object, hereinafter referred to with the name of apparatus interface 24, designed for virtualization of the on-board apparatuses 3;
- a software object, hereinafter referred to, for reasons of convenience, with the name of shared database 25, designed for the storage of shared data between the human-machine interface 23 and the apparatus interface 24, such as primary-flight and aircraft parameters 2, operational states of the avionic system 1, and commands directed to the on-board apparatuses 3 and generated according to the selections made by the user;

- a software object, hereinafter referred to, for reasons of convenience, with the name of controller 26, designed for the management of data exchange between the human-machine interface 23 and the apparatus interface 24;
- a software object, hereinafter referred to, for reasons of convenience, with the name of navigator 27, designed for the execution of calculations and algorithms during the various steps of navigation, in a way in itself known and hence not described in detail; and
- a software object, hereinafter referred to, for reasons of convenience, with the name of scheduler 28, designed for scheduling the operations executed by the various software objects, according to a logic sequence described in what follows.

The human-machine interface 23 comprises a plurality of modules 29 for managing the interface devices 7, and a module 30 for managing the selections made by the user. Each management module 29 is associated to a respective interface device 7 and creates a communication between the interface device 7 itself and the shared database 25.

In particular, each management module 29 is designed to: acquire a selection 31 made by the user via the keypad 11 of the corresponding interface device 7, the selection 31 of which can be constituted by a selection proper to a datum in a menu presented to the user or else by the entry of the datum itself; display on the corresponding interface device 7 graphic symbols representing the selection 31 made; and send the selection 31 made to the management module 30, which has the function of gathering all the selections 31 made by the user via the various interface devices 7 and of resolving possible concurrent accesses, conflicting or otherwise, to the on-board apparatuses 3.

The controller 26 comprises a translator module 32, designed to: acquire, via interrogation operations of a "select" type, the selections 31 gathered by the management module 30; convert said selections 31 into respective commands 33; and send the commands 33 to the shared database 25 via operations of writing of a "set" type. The controller 26 further comprises a state-controller module 34, designed to manage the state transitions of the avionic system 1 according to the selections 31 gathered by the management module 30 and according to calculations made by the navigator 27.

The apparatus interface 24 comprises a plurality of modules 35 for managing the on-board apparatuses 3, each of which is associated to a respective on-board apparatus 3 and creates a communication between the on-board apparatus 3 itself and the shared database 25. In particular, each management module 35 is designed to acquire, via interrogation operations of a "select" type, the commands 33 generated by the translator module 32 and directed to the respective on-board apparatus 3, and implement said commands 33 on the on-board apparatus 3 itself, appropriately handling any possible conflicts between the commands 33 and operational constraints of the on-board apparatus 3, modifying the execution of the commands 33 according to pre-defined criteria.

Said modifications are then transferred into the shared database 25, overwriting, via operations of writing of a "set" type, any possible parameters involved in these modifications, such as for example current operational parameters 36 of the on-board apparatuses 3 and general parameters 37, such as flight and/or aircraft parameters 2, and/or operational states of the avionic system 1.

The shared database 25 comprises a first module 38 for storing the current operational parameters 36 and the commands 33, and a second module 39 for storing the general parameters 37. The first storage module 38 and the second storage module 39 are interrogated by the management modules 29 for the purpose of acquiring the current operational parameters 36 and the general parameters 26 and displaying them on the interface devices 7.

In use, the scheduler 28 activates:
- the human-machine interface 23 for acquiring the selections 31 made by the user on the interface devices 7 (100);
- the controller 26 for acquiring the selections 31 from the human-machine interface 23 to convert them into respective commands 33 for the on-board apparatuses 3 and write the commands 33 in the shared database 25 (200);
- the apparatus interface 24 for acquiring the commands 33 from the shared database 25 to implement them on the on-board apparatuses 3 (300), and for writing, in the shared database 25, the current operational parameters 36 and the general parameters 37, possibly modified following upon execution of the commands 33 (400); and finally
- the human-machine interface 23 for acquiring the current operational parameters 36 and the general parameters 37 from the shared database 25 and displaying them on the interface devices 7 (500).

More in detail, when the pilot makes a selection 31 designed for a given on-board apparatus 3 via the keypad 11 of a corresponding interface device 7, the corresponding management module 29 produces a datum representing the selection 31 made, which is gathered (101) by the management module 30 to make the selection 31 usable by the translator module 32, which accesses (201) said selection 31 and converts it (202), through an appropriate validation depending upon the current operational state of the avionic system 1, into a corresponding command 33.

The command 33 thus generated is entered (203) into the first storage module 38 to make it usable by the module 35 for managing the on-board apparatus 3 to which the command 33 is destined. Next, the management module 35 accesses (301) the first storage module 38, takes up the command 33 and implements it on the corresponding on-board apparatus 3. In this a way, then, the module 35 for managing the on-board apparatus 3 "consumes" the datum initially "produced", in the form of selection 31, by the module 29 for managing the interface device 7.

At this point, the module 35 for managing the on-board apparatus 3 "produces" a current operational parameter 36 regarding the on-board apparatus 3, and, possibly, a general parameter 37, such as a flight and/or aircraft parameter 2, and/or an operational state of the avionic system 1.

The current operational parameters 36 and the general parameters 37 are then entered (401, 402), respectively, into the first storage module 38 and into the second storage module 39, so as to render said current operational parameters 36 and general parameters 37 usable by those modules 29 for managing the interface devices 7 that are involved in the use of the current operational parameters 36 and general parameters 37 themselves. Next, the management modules 29 access (501, 502), without the intermediation of the translator module 32, the current operational parameters 36 and the general parameters 37, and display them on the respective interface devices 7. In this way, the modules 29 for managing the interface devices 7 become "consumers" of the data "produced", in the form of current operational parameters 36 and of general parameters 37, by the module 35 for managing the on-board apparatus 3.

As may be noted, the logic sequence followed by the scheduler 28 conveys, by means of relations of use between the various modules, a datum between the human-machine interface 23 and the apparatus interface 24 along two distinct paths according to whether the datum produced is constituted by a selection 31, or else by a current operational parameter 36 or a general parameter 37.

From the above description, there is evident a function of decoupling performed by the management module 30, by the translator module 32, and by the shared database 25. In particular, the shared database 25 and the management module 30 function as passive objects in so far as they make available, by means of operations of "select" and "set", the selections 31 and the commands 33 to the translator module 32, which functions, instead, as active object. Hence, said decoupling enables avoidance of direct relations of use for the exchange of a datum, constituted by a selection 31, a command 33, a current operational parameter 36, or else a general parameter 37, between a module 29 for managing an interface device 7, which initially is one for producing data and then becomes a consumer of data, and a module 35 for managing an on-board apparatus 3, which initially is a consumer of data and then becomes one for producing data.

This leads to the evident advantage that the addition of an on-board apparatus 3 or of an interface device 7 simply requires the addition of a respective management module 35 or 29 and possibly updating of mapping between selections 31 and commands 33 in the translator module 32 in so far as the relations of use between the human-machine interface 23, the shared database 25, and the controller 26 do not have to be modified.

Furthermore, the logic sequence followed by the scheduler 28 is shared in a finite number of concurrent processes with definite priorities and frequencies. In particular, the translator module 32 performs its tasks within a maximum-priority-and-frequency process, guaranteeing the correct logical sequence.

Finally, it should be noted that the construction of the operational flight program 22 in the programming language Ada 95 enables advantageous exploitation of the intrinsic characteristics of this programming language, i.e., atomic access to the data (selection 31, command 33, current operational parameter 36, or general parameter 37) and protection from concurrent accesses in reading and writing by parallel processes, for example by the modules 29, 32, 35, which, being created as "protected objects", reinforce decoupling between the human-machine interface 23 and the apparatus interface 24.

Based on what has been described above, it is thus possible to immediately establish that the present invention achieves a software architecture that allows all of the above-indicated design objectives to be attained, namely:
- ability to implement a plurality of human-machine interface devices and a variety of sensors/actuators via an open and modular configuration, where the number of human-machine interface devices and the number of sensors/actuators are functions of the safety level, and therefore of the redundancy level, requested by the platform under development,
- communication between a plurality of human-machine interface devices and sensors/actuators that is achieved through a plurality of instances of a same, uniquely-defined software class,
- decoupling of the software architecture between the plurality of human-machine interface devices and the plurality of sensors/actuators that allows high maintainability of the software application and ease of expansion,
- ability to solve possible access conflicts to the shared data structures, achievable through a rule/priority matrix, and
- a software application in conformity with the necessary process requirements to support the certification procedures associated with safety-critical software applications, according to the RTCA-DO178B standard in the specific case of an aircraft.

## Claims

1. A high-dynamics safety-critical system (1) comprising at least one electronic apparatus (3), at least one human-machine interface device (7) designed to allow a user to interact with the at least one electronic apparatus (3); and a processing device (5) connected to the at least one electronic apparatus (3) and the at least one human-machine interface device (7) and programmed to manage data exchange in the high-dynamics safety-critical system (1); wherein the processing device (5) is designed to store and execute a module-based data exchange management software program including the following software modules:
• a human-machine interface (23) designed to virtualize the human-machine interface device (7);
• an apparatus interface (24) designed to virtualize the electronic apparatus (3);
• a shared database (25) designed to store data to be shared between the human-machine interface (23) and the apparatus interface (24);
• a controller (26) designed to manage exchange of data to be shared between the human-machine interface (23) and the apparatus interface (24); and
• a scheduler (28) designed to schedule the operation of the human-machine interface (23), the apparatus interface (24), the shared database (25) and the controller (26);
wherein the human-machine interface (23) comprises the following modules:
• an interface manager (29) for each human-machine interface device (7) and designed to establish a communication between the respective human-machine interface device (7) and the shared database (25); and
• a selection manager (30) designed to manage selections made by a user;
wherein each interface manager (29) is designed to:
- acquire a data entry (31) in the corresponding human-machine interface device (7);
- send the data entry (31) to the selection manager (30);
- acquire data (36, 37) stored in the shared database (25) for the respective human-machine interface device (7); and
- entering the acquired data into the respective human-machine interface device (7);
and wherein the selection manager (30) is designed to:
- gather the data entries (31) made on the human-machine interface device (7); and
- send the gathered data entries to the controller (26);
wherein the controller (26) comprises the following module:
• a translator (32) designed to:
- acquire a data entry (31) sent by the selection manager (30);
- validate the acquired data entry (31) according to a current operational state of the high-dynamics safety-critical system (1);
- transform the acquired data entry (31) into a command (33) for the electronic apparatus (7); and
- store the command (33) in the shared database (25) to make it available to the apparatus interface (24);
and wherein the apparatus interface (24) comprises the following module:
• an apparatus manager (35) for each electronic apparatus (3) and designed to establish a communication between the respective electronic apparatus (3) and the shared database (25);
wherein each apparatus manager (35) is designed to:
- acquire a command (33) stored in the shared database (25) for the respective electronic apparatus (3);
- execute the acquired command (33) on the respective electronic apparatus (3); and
- generate and store in the shared database (25) data relating to the operation of the respective electronic apparatus (3) and/or of the high-dynamics safety-critical system (1) to make it available to the human-machine interface (23);
whereby the data exchange management software program becomes configurable such that an addition of an electronic apparatus (3) or of human-machine interface device (7) requires an addition of a respective apparatus manager (35) or of an interface manager (29) and possibly updating of mapping between data entries (31) and commands (33) in the translator (32), in so far as the relations of use between the human-machine interface (23), the shared database (25), and the controller (26) do not have to be modified.

2. The system of claim 1, wherein the selection manager (35) is further designed to:
- resolve conflicting concurrent accesses to the electronic apparatus (3).

3. The system of claims 1 or 2, wherein each apparatus manager (35) is further designed to:
- appropriately handling conflicts between commands (33) and operational constraints of the electronic apparatus (3); and
- in case of conflicts between commands (33) and operational constraints of the electronic apparatus (3), modify execution of the commands (33) accordingly based on pre-defined criteria, and modify data (36, 37) stored in the shared database (25) and affected by the modification of the execution of the commands (33).

4. The system of any preceding claim, wherein the shared database (25) comprises the following modules:
• an apparatus storage (38) designed to store commands (33) and data (36) relating to the electronic apparatus (3); and
• a system storage (39) to store data (37) relating to the high-dynamics safety-critical system (1).

5. The system of any preceding claim, wherein the scheduler (28) is designed to sequentially operate:
• the human-machine interface (23) to acquire a data entry (31) made in an human-machine interface device (7);
• the controller (26) to acquire and transform the data entry (31) into a command (33) for an electronic apparatus (3) and send the command (33) to the shared database (25);
• the shared database (25) to store the command (33) to make it available to the apparatus interface (24);
• the apparatus interface (24) to acquire the command (33) from the shared database (25) and execute it on the electronic apparatus (3); and
• the human-machine interface (23) to acquire parameters (36, 37) stored in the shared database (25) and display them on the human-machine interface device (7).

## Patentansprüche

1. Ein hochdynamisches, sicherheitskritisches System (1), das wenigstens eine elektronische Vorrichtung (3), wenigstens eine Mensch-Maschine-Schnittstellenvorrichtung (7), die es einem Benutzer erlaubt mit der wenigstens einen elektronischen Vorrichtung (3) zu interagieren, und ein Verarbeitungsgerät (5) aufweist, das mit der wenigstens einen elektronischen Vorrichtung (3) und der Mensch-Maschine-Schnittstellenvorrichtung (7) verbunden ist und programmiert ist, dass es einen Datenaustausch in dem hochdynamischen, sicherheitskritischen System (1) managen kann, wobei das Verarbeitungsgerät (5) ausgelegt ist, dass es ein modul-basiertes Datenaustausch-Management-Software-Programm speichert und ausführt, inklusive der folgenden Software Module:
eine Mensch-Maschine-Schnittstelle (23), die ausgelegt ist, um die Mensch-Maschine-Schnittstellenvorrichtung (7) zu virtualisieren beziehungsweise zu verwirklichen;
eine Vorrichtungsschnittstelle (24), die ausgelegt ist, um die elektronische Vorrichtung (3) zu verwirklichen;
eine gemeinsame Datenbank (25), die ausgelegt ist, um Daten zu speichern, die zwischen der Mensch-Maschine-Schnittstelle (23) und der Vorrichtungsschnittstelle (24) geteilt werden;
einen Controller (26), der ausgelegt ist, um einen Datenaustausch zu managen, wobei die Daten zwischen der Mensch-Maschine-Schnittstelle (23) und der Vorrichtungsschnittstelle (24) geteilt werden;
einen Scheduler (28), der ausgelegt ist, um den Betrieb der Mensch-Maschine-Schnittstelle (23), der Vorrichtungsschnittstelle (24), der gemeinsamen Datenbank (25) und des Controllers (26) zu schedulen;
wobei die Mensch-Maschine-Schnittstelle (23), die folgenden Module aufweist:
einen Schnittstellenmanager (29) für jede Mensch-Maschine-Schnittstellenvorrichtung (7), der ausgelegt ist, um eine Kommunikation zwischen der entsprechenden Mensch-Maschine-Schnittstellenvorrichtung (7) und der gemeinsamen Datenbank (25) einzurichten; und
einen Auswahlmanager (30), der ausgelegt ist, um eine Auswahl eines Benutzers zu managen;
wobei jeder Schnittstellenmanager (29) ausgelegt ist, um:
- einen Dateneintrag (31) in der entsprechenden Mensch-Maschine-Schnittstellenvorrichtung (7) zu akquirieren;
- den Dateneintrag (31) an den Auswahlmanager (30) zu senden;
- Daten (36, 37) für die entsprechende Mensch-Maschine-Schnittstellenvorrichtung (7) zu akquirieren, die in der gemeinsamen Datenbank (25) gespeichert sind; und
- die akquirierten Daten in die entsprechende Mensch-Maschine-Schnittstellenvorrichtung (7) einzugeben;
und wobei der Auswahlmanager (30) ausgelegt ist, um:
- die Dateneinträge (31) zu sammeln, die auf der Mensch-Maschine-Schnittstellenvorrichtung (7) gemacht wurden; und
- die gesammelten Dateneinträge an den Controller (26) zu senden;
wobei der Controller (26) die folgenden Module aufweist:
einen Übersetzer (32), der ausgelegt ist, um:
- einen Dateneintrag (31) zu akquirieren, der von dem Auswahlmanager (30) gesendet wurde;
- den akquirierten Dateneintrag (31) zu validieren, entsprechend einem augenblicklichen Betriebszustand des hochdynamischen, sicherheitskritischen Systems (1);
- den akquirierten Dateneintrag (31) in einen Befehl (33) für die elektronische Vorrichtung (7) zu übersetzen; und
- den Befehl (33) in der gemeinsamen Datenbank (25) zu speichern, um ihn für die Vorrichtungsschnittstelle (24) verfügbar zu machen;
und wobei die Vorrichtungsschnittstelle (24) die folgenden Module aufweist:
einen Vorrichtungsmanager (35) für jede elektronische Vorrichtung (3), der ausgelegt ist, um eine Kommunikation zwischen der entsprechenden elektronischen Vorrichtung (3) und der gemeinsamen Datenbank (25) einzurichten;
wobei jeder Vorrichtungsmanager (35) ausgelegt ist, um:
- einen Befehl (33), der in der gemeinsamen Datenbank (25) für die entsprechende elektronische Vorrichtung (3) gespeichert ist, zu akquirieren;
- den akquirierten Befehl (33) auf der entsprechenden elektronischen Vorrichtung (3) auszuführen; und
- in der gemeinsamen Datenbank (25) Daten bezüglich des Betriebs der entsprechenden elektronischen Vorrichtung (3) und/oder des hochdynamischen, sicherheitskritischen Systems (1) zu erzeugen und zu speichern, um sie der Mensch-Maschine-Schnittstelle (23) verfügbar zu machen;
wobei das Datenaustausch-Management-Software-Programm konfigurierbar wird, dass ein Hinzufügen einer elektronischen Vorrichtung (3) oder ein Hinzufügen einer Mensch-Maschine-Schnittstellenvorrichtung (7) das Hinzufügen eines entsprechenden Vorrichtungsmanagers (35) oder eines Schnittstellenmanagers (29) erfordert und möglicherweise das Aktualisieren eines Abgleichs zwischen Dateneinträgen (31) und Befehlen (33) in dem Übersetzer (32) erfordert, insofern, als die Benutzungsbeziehungen zwischen der Mensch-Maschine-Schnittstelle (23), der gemeinsam Datenbank (25) und dem Controller (26) nicht modifiziert werden müssen.

2. Das System nach Anspruch 1, wobei der Auswahlmanager (35) ferner ausgelegt ist, um:
- sich entgegenstehende, gleichzeitige Zugriffe auf die elektronische Vorrichtung (3) aufzulösen.

3. Das System nach Anspruch 1 oder 2, wobei jeder Vorrichtungsmanager (35) ferner ausgelegt ist, um:
- Konflikte zwischen Befehlen (33) und betriebsmäßigen Einschränkungen der elektronischen Vorrichtung (3) angemessen zu behandeln; und
- im Fall eines Konflikts zwischen Befehlen (33) und betriebsmäßigen Einschränkungen der elektronischen Vorrichtung (3), die Ausführung der Befehle (33) entsprechend vordefinierter Kriterien zu modifizieren, und Daten (36, 37), die in der gemeinsamen Datenbank (25) gespeichert sind und von der Modifikation der Ausführung der Befehle (33) betroffen sind, zu modifizieren.

4. Das System nach einem der vorhergehenden Ansprüche, wobei die gemeinsame Datenbank (25) die folgenden Module aufweist:
einen Vorrichtungsspeicher (38), der so ausgelegt ist, um Befehle (33) und Daten (36) bezüglich der elektronischen Vorrichtung (3) zu speichern; und
einen Systemspeicher (39) um Daten (37) bezüglich des hochdynamischen, sicherheitskritischen Systems (1) zu speichern.

5. Das System nach einem der vorhergehenden Ansprüche, wobei der Scheduler (28) ausgelegt ist, um das Folgende nacheinander zu betreiben:
die Mensch-Maschine-Schnittstelle (23), um einen Dateneintrag (31) zu akquirieren, der in einer Mensch-Maschine-Schnittstellenvorrichtung (7) gemacht wurde;
den Controller (26), um den Dateneintrag (31) zu akquirieren und in einen Befehl (33) für eine elektronische Vorrichtung (3) zu übersetzen, und um den Befehl (33) an die gemeinsame Datenbank (25) zu senden;
die gemeinsame Datenbank (25), um den Befehl (33) zu speichern, um ihn der Vorrichtungsschnittstelle (24) verfügbar zu machen;
die Vorrichtungsschnittstelle (24), um den Befehl (33) von der gemeinsamen Datenbank (25) zu akquirieren und um ihn auf der elektronischen Vorrichtung (3) auszuführen; und
die Mensch-Maschine-Schnittstelle (23), um Parameter (36, 37) zu akquirieren, die in der gemeinsamen Datenbank (25) gespeichert sind und um sie auf der Mensch-Maschine-Schnittstellenvorrichtung (7) anzuzeigen.

## Revendications

1. Système à haute dynamique critique interne de sécurité (1) comprenant au moins un appareil électronique (3), au moins un dispositif d'interface homme-machine (7) conçu pour permettre à un utilisateur d'interagir avec ledit au moins un appareil électronique (3) ; et un dispositif de traitement (5) connecté à l'au moins un appareil électronique (3) et à l'au moins un dispositif d'interface homme-machine (7) et programmé pour gérer un échange de données dans le système à haute dynamique critique interne de la sécurité (1) ; dans lequel le dispositif de traitement (5) est conçu pour stocker et exécuter un programme logiciel de gestion d'échange de données à base de modules comprenant les modules logiciels suivants :
- une interface homme-machine (23) conçue pour virtualiser le dispositif d'interface homme-machine (7) ;
- une interface d'appareil (24) conçue pour virtualiser l'appareil électronique (3) ;
- une base de données partagée (25) conçue pour stocker des données devant être partagées entre l'interface homme-machine (23) et l'interface d'appareil (24) ;
- un contrôleur (26) conçu pour gérer un échange de données devant être partagées entre l'interface homme-machine (23) et l'interface d'appareil (24) ; et
- un ordonnanceur (28) conçu pour ordonnancer le fonctionnement de l'interface homme-machine (23), de l'interface d'appareil (24), de la base de données partagée (25) et du contrôleur (26) ;
dans lequel l'interface homme-machine (23) comprend les modules suivants :
- un gestionnaire d'interface (29) pour chaque dispositif d'interface homme-machine (7) et conçu pour établir une communication entre le dispositif d'interface homme-machine (7) associé et la base de données partagée (25) ; et
- un gestionnaire de sélection (30) conçu pour gérer des sélections effectuées par un utilisateur ;
dans lequel chaque gestionnaire d'interface (29) est conçu pour :
- acquérir une entrée de données (31) dans le dispositif d'interface homme-machine (7) correspondant ;
- envoyer l'entrée de données (31) au gestionnaire de sélection (30) ;
- acquérir des données (36, 37) stockées dans la base de données partagée (25) pour le dispositif d'interface homme-machine (7) associé ; et
- entrer les données acquises dans le dispositif d'interface homme-machine (7) associé ;
et dans lequel le gestionnaire de sélection (30) est conçu pour :
- collecter les entrées de données (31) effectuées sur le dispositif d'interface homme-machine (7) ; et
- envoyer les entrées de données collectées au contrôleur (26) ;
dans lequel le contrôleur (26) comprend le module suivant :
- un traducteur (32) conçu pour :
- acquérir une entrée de données (31) envoyée par le gestionnaire de sélection (30) ;
- valider l'entrée de données (31) acquise selon un état opérationnel actuel du système à haute dynamique critique externe de la sécurité (1) ;
- transformer l'entrée de données (31) acquise en une commande (33) pour l'appareil électronique (7) ; et
- stocker la commande (33) dans la base de données partagée (25) pour la rendre disponible pour l'interface d'appareil (24) ;
et dans lequel l'interface d'appareil (24) comprend le module suivant :
- un gestionnaire d'appareil (35) pour chaque appareil électronique (3) et conçu pour établir une communication entre l'appareil électronique (3) correspondant et la base de données partagée (25) ;
dans lequel chaque gestionnaire d'appareil (35) est conçu pour :
- acquérir une commande (33) stockée dans la base de données partagée (25) pour l'appareil électronique (3) correspondant;
- exécuter la commande (33) acquise sur l'appareil électronique (3) correspondant; et
- générer et stocker dans la base de données partagée (25) des données relatives au fonctionnement de l'appareil électronique (3) correspondant et/ou du système à haute dynamique critique pour la sécurité (1) pour les rendre disponibles pour l'interface homme-machine (23) ;
le programme logiciel de gestion d'échange de données devenant ainsi configurable de sorte qu'un ajout d'un appareil électronique (3) ou d'un dispositif d'interface homme-machine (7) requière un ajout d'un gestionnaire d'appareil (35) correspondant ou d'un gestionnaire d'interface (29) et éventuellement la mise à jour de la correspondance entre des entrées de données (31) et des commandes (33) dans le traducteur (32), dans la mesure où les relations d'utilisation entre l'interface homme-machine (23), la base de données partagée (25), et le contrôleur (26) ne doivent pas être modifiées.

2. Système selon la revendication 1, dans lequel le gestionnaire de sélection (35) est en outre conçu pour :
- résoudre des accès simultanés conflictuels à l'appareil électronique (3).

3. Système selon la revendication 1 ou 2, dans lequel chaque gestionnaire d'appareil (35) est en outre conçu pour :
- prendre en charge de façon appropriée des conflits entre des commandes (33) et des contraintes opérationnelles de l'appareil électronique (3) ; et
- en cas de conflits entre des commandes (33) et des contraintes opérationnelles de l'appareil électronique (3), modifier l'exécution des commandes (33) en conséquence sur la base de critères prédéfinis, et modifier des données (36, 37) stockées dans la base de données partagée (25) et concernées par la modification de l'exécution des commandes (33).

4. Système selon l'une quelconque des revendications précédentes, dans lequel la base de données partagée (25) comprend les modules suivants :
- un module de stockage (38) conçu pour stocker des commandes (33) et des données (36) relatives à l'appareil électronique (3) ; et
- un module de stockage (39) pour stocker des données (37) relatives au système à haute dynamique critique externe de la sécurité (1).

5. Système selon l'une quelconque des revendications précédentes, dans lequel l'ordonnanceur (28) est conçu pour exploiter séquentiellement :
- l'interface homme-machine (23) pour acquérir une entrée de données (31) effectuée dans un dispositif d'interface homme-machine (7) ;
- le contrôleur (26) pour acquérir et transformer l'entrée de données (31) en une commande (33) pour un appareil électronique (3) et envoyer la commande (33) à la base de données partagée (25) ;
- la base de données partagée (25) pour stocker la commande (33) pour la rendre disponible pour l'interface d'appareil (24) ;
- l'interface d'appareil (24) pour acquérir la commande (33) depuis la base de données partagée (25) et l'exécuter sur l'appareil électronique (3) ; et
- l'interface homme-machine (23) pour acquérir des paramètres (36, 37) stockés dans la base de données partagée (25) et les afficher sur le dispositif d'interface homme-machine (7).
